# FASCICULE DE BREVET EUROPEEN

(11) **EP 3 784 512 B1**
(45) Date de publication et mention de la délivrance du brevet: **20.09.2023**
(21) Numéro de dépôt: 19718779.2
(22) Date de dépôt: 18.03.2019
(51) Int. Cl.: B60J 10/25, B60J 10/27, B60J 10/36, B60J 10/75

(54) **JOINT LECHEUR DE VITRE**
DICHTUNGSLEISTE FÜR EIN FENSTER
WEATHERSTRIP SEAL FOR A WINDOW

(30) Priorité: 26.04.2018 FR 1853639
(43) Date de publication de la demande: 03.03.2021
(73) Titulaire: PSA Automobiles SA, 78300 Poissy (FR)
(72) Inventeur: ZAINANE, Abdelhalim, 75014 PARIS 14 (FR); SCHENK, Thierry, 92140 CLAMART (FR)
(86) Numéro de dépôt international: PCT/FR2019/050603
(87) Numéro de publication internationale: WO 2019/207218

(56) Documents cités:
- CN-A- 103 587 394
- FR-A1- 2 975 036
- JP-A- 2013 028 203
- JP-B2- 3 100 292
- US-A1- 2013 061 532

## Description

L'invention porte sur un joint lécheur de vitre de véhicule et un véhicule comportant un tel joint lécheur.

Afin de créer une étanchéité entre le bord d'un panneau de carrosserie et une vitre mobile, il est connu de fixer à ce bord du panneau un joint lécheur. Le joint lécheur est généralement un profilé comportant une lèvre souple qui s'étend sur toute la longueur du profilé. Lorsque le joint lécheur est fixé au panneau de carrosserie, la lèvre s'appuie contre la surface de la vitre de sorte à réaliser une étanchéité entre le panneau de carrosserie et ladite vitre. Quand la vitre se déplace en coulissant derrière le panneau de carrosserie, la lèvre glisse contre la surface de la vitre. Si la surface de la vitre contre laquelle s'appuie la lèvre est mouillée, ce glissement de la lèvre sur la vitre permet d'évacuer une grande partie de l'eau située sur cette surface de la vitre, et donc de nettoyer et d'améliorer la visibilité au travers de cette vitre. Un tel joint lécheur est utilisée par exemple sur une porte de véhicule comportant une vitre coulissant derrière un panneau de carrosserie formant un caisson de porte.

Afin de rendre moins visible le joint lécheur, il est connu de fixer ledit joint lécheur le long du bord du panneau de carrosserie et derrière ce panneau de carrosserie de sorte qu'une grande partie dudit joint lécheur soit caché par ledit panneau. Par exemple, le brevet FR2975036 décrit dans un des modes de réalisation, un joint lécheur se fixant le long du bord d'un panneau extérieur de porte de véhicule disposé en vis-à-vis d'une vitre coulissante, et formant une étanchéité entre la vitre et le panneau extérieur de porte. Le joint lécheur comporte un corps auquel sont reliées deux lèvres, une lèvre intérieure et une lèvre extérieure. Le corps et les deux lèvres forment un profilé qui s'étend le long du bord du panneau extérieur faisant face à la vitre. La lèvre intérieure, la lèvre extérieure et la partie du corps sur laquelle sont reliées lesdites lèvres forment un canal de section en « U », dont l'ouverture du « U » est orienté vers le haut du véhicule, à la manière d'une gouttière. La lèvre extérieure s'appuie contre le bord du panneau extérieur et la lèvre intérieure s'appuie contre la vitre. Le corps du joint lécheur est fixé sur un raidisseur du panneau extérieur, fixé audit panneau et situé entre ce panneau extérieur et la vitre. Ledit corps est caché par le panneau extérieur pour une personne située à l'extérieur du véhicule. Une partie de la lèvre extérieure dépasse au-dessus du bord du panneau extérieur, et est visible depuis l'extérieur du véhicule, tandis que la majeure partie du joint lécheur est caché par le panneau extérieur.

L'inconvénient d'une telle solution est que lorsqu'il pleut, toute l'eau qui s'écoule le long de la vitre est récupérée par le canal ouvert formé par le joint lécheur, entre les deux lèvres, et s'écoule aux extrémités dudit canal dans la porte. Un autre inconvénient est que, lorsque le véhicule roule, l'air circulant à la surface du véhicule s'engouffre dans le canal du joint lécheur et vient frapper une partie de la structure de la porte située à l'extrémité du joint lécheur opposé au sens de l'avancement du véhicule et rentre dans la porte, générant des bruits aérodynamiques. Le document JP 3 100292 B2 montre un teljoint lécheur avec un élément de fermeture à l'une des extrémités du canal de sorte à fermer au moins partiellement ladite extrémité du canal.

L'objectif de l'invention est de remédier à ces inconvénients. En particulier, un des buts de l'invention est de proposer un joint lécheur peu visible limitant la quantité d'eau qui s'écoule dans la porte.

Ce but est atteint selon l'invention, grâce à un joint lécheur de vitre selon la revendication 1.

Ainsi avantageusement, le joint lécheur peut être placé derrière un panneau de carrosserie, de sorte à cacher ledit joint lécheur, pour réaliser une étanchéité entre ledit panneau de carrosserie et une vitre à l'aide de la lèvre d'étanchéité s'appuyant contre le panneau de carrosserie, sur la face dudit panneau située face à la vitre, et de la lèvre de contact s'appuyant contre la vitre, tout en limitant la quantité d'eau s'écoulant à l'une des extrémité du canal grâce à l'élément de fermeture. En cas de pluie, l'eau s'accumule dans le canal suite au ruissellement sur la vitre, et s'écoule de manière limitée au niveau de l'extrémité du canal grâce à cet élément de fermeture. Par exemple, si le joint lécheur est disposé sur une porte de véhicule, entre un panneau de carrosserie et une vitre, la quantité d'eau qui risque de s'écouler à l'intérieur de la porte depuis l'extrémité du canal est réduite. En limitant l'écoulement de l'eau à l'extrémité du canal, et notamment aux deux extrémités, le niveau d'eau dans le canal peut monter jusqu'à déborder du canal par-dessus le panneau de carrosserie, et s'écouler sur la surface extérieure du panneau de carrosserie orientée du côté de l'extérieur du véhicule, comme par exemple en cas de forte pluie. De même, en disposant un élément de fermeture à chaque extrémité du canal de sorte à ce qu'il ferme totalement chacune de ces extrémités lorsque le joint lécheur est fixé à un véhicule avec la lèvre de contact appuyée contre la vitre du véhicule et la lèvre d'étanchéité appuyée contre le panneau de carrosserie, en cas de pluie, l'eau s'accumule dans le canal jusqu'à déborder par-dessus le bord du panneau extérieur et ne s'écoule pas par les extrémités du canal.

Un autre avantage est que l'élément de fermeture permet de réduire les bruits d'air lorsque le véhicule roule en formant une barrière en bout de canal. Cet élément de fermeture limite la quantité d'air qui frappe des éléments de structures du véhicule situés en vis-à-vis de l'extrémité du canal, et/ou la quantité d'air qui rentre derrière le panneau de carrosserie en passant par le canal, par exemple à l'intérieur d'une porte sur laquelle est fixé un tel joint lécheur.

Dans un mode de réalisation particulier de l'invention, l'élément de fermeture est une paroi de fermeture, de préférence sensiblement perpendiculaire à la direction longitudinale du joint lécheur, disposée au niveau de l'extrémité du canal.

Ainsi avantageusement, l'élément de fermeture peut être étroit, donc peu visible, tout en ayant une bonne capacité à fermer au moins partiellement l'extrémité du canal. Cette paroi est disposée au niveau de l'extrémité du canal, c'est-à-dire juste à l'extrémité ou une distance faible de l'extrémité du canal par rapport à la longueur totale du joint lécheur. Par exemple, pour une longueur de joint lécheur d'environ 70 centimètres, la paroi de fermeture est disposée à moins de 10 centimètre de l'extrémité du joint lécheur, ou encore à moins de 7 centimètres.

Dans un autre mode de réalisation de l'invention, le joint lécheur comporte deux éléments de fermeture, chacun au niveau d'une extrémité du canal.

Ainsi avantageusement, l'écoulement de l'eau récupérée par le joint lécheur dans le canal est maîtrisé au niveau de chacune des extrémités du canal. Cet écoulement peut être par exemple limité à un débit donner ou totalement bloquer au niveau de chacune de ces extrémités.

Dans un mode de réalisation particulier de l'invention, le corps est sous la forme d'un profilé sensiblement plan, l'une des lèvres s'étendant le long d'un des bords longitudinaux du profilé, dans le prolongement dudit profilé, et l'autre lèvre s'étendant depuis l'une des faces du corps et comportant un segment dans sa section qui est sensiblement parallèle à la lèvre précédente de sorte à former un canal de section en forme de « U ».

Ainsi avantageusement, l'espace nécessaire entre une vitre et un panneau de carrosserie pour installer un teljoint lécheur peut être réduit. En effet, lorsque le joint lécheur est fixé à un véhicule, la lèvre d'étanchéité s'appuyant contre un panneau de carrosserie et la lèvre de contact s'appuyant contre une vitre située en vis-à-vis du panneau de carrosserie, le canal formé par les deux lèvres bouche l'espace entre le panneau de carrosserie et la vitre avec le corps qui s'étend verticalement sous le canal et qui peut être fixé au panneau de carrosserie.

Selon l'invention, la ou les éléments de fermeture sont issues du corps, et/ou de la lèvre de contact, et/ou de la lèvre d'étanchéité.

Ainsi avantageusement, la fabrication du joint lécheur est simplifiée car la ou les éléments de fermeture ne sont pas des pièces rajoutées, mais obtenu par une forme particulière du corps, de la lèvre de contact et/ou de la lèvre d'étanchéité.

Dans un mode de réalisation particulier de l'invention, la ou les éléments de fermeture comportent un trou de passage apte à laisser s'écouler l'eau s'accumulant dans le canal.

Ce mode de réalisation est particulièrement intéressant lorsque la ou les éléments de fermetures ferment totalement la ou les extrémités du canal, notamment lorsque le joint lécheur est installé sur le véhicule, afin de permettre un écoulement contrôlé en débit et en position de l'eau qui peut s'accumuler dans le canal, et éviter une stagnation de l'eau dans le canal.

Dans un mode de réalisation particulier de l'invention, le joint lécheur comporte un trou d'évacuation disposé dans l'une des parois du canal, entre les deux extrémités dudit canal, de sorte à permettre une évacuation de l'eau s'accumulant dans le canal suivant un débit donné.

Ainsi, les risques de mouiller des équipements électriques situés du côté du panneau extérieur faisant face à la vitre sont réduits. En effet, lors de pluie de faible ou de moyenne intensité, l'eau s'accumulant dans le canal s'évacue à un endroit choisi et suivant un débit maximum donné du côté du panneau de carrosserie faisant face à la vitre, grâce à la dimension et la position choisie pour le trou d'évacuation. Ainsi, l'eau ruisselant sur la vitre et qui s'accumule dans le canal ne s'écoule pas sur la face extérieure du panneau de carrosserie orientée vers l'extérieur du véhicule, ce qui évite de salir cette face extérieure du panneau de carrosserie. Par contre, en cas de pluie intense occasionnelle, la quantité d'eau qui peut s'écouler du côté du panneau de carrosserie opposée à la face extérieure étant limitée par la taille du trou d'évacuation, l'eau déborde du canal et s'écoule sur la face extérieure du panneau de carrosserie.

L'invention porte aussi sur une porte de véhicule comprenant une partie fenêtre comportant une vitre située au-dessus d'une partie caisson, la partie caisson étant formée par un panneau extérieur et un panneau intérieur, remarquable en ce que ladite porte comporte un joint lécheur suivant l'une des revendications précédentes, dans le caisson, fixé au panneau extérieur, le long et sous un bord haut dudit panneau extérieur séparant le caisson de la partie fenêtre, la lèvre de contact étant en appui contre la surface de la vitre et la lèvre d'étanchéité étant en appui contre le panneau extérieur, le long du bord haut dudit panneau extérieure.

Ainsi avantageusement, le joint lécheur est très peu visible depuis l'extérieur du véhicule et forme une étanchéité efficace entre le panneau de carrosserie et la vitre. La lèvre d'étanchéité est de préférence située à moins de 1 ou 2 centimètres du bord haut du panneau extérieur.

Dans un mode de réalisation particulier de la porte, la vitre coulisse dans le caisson depuis une position fermée dans laquelle elle ferme la partie fenêtre et une position ouverte dans laquelle elle est au moins en partie dans le caisson.

Dans un mode de réalisation, le panneau extérieur comporte une paroi extérieure sur laquelle est fixée un raidisseur, le long du bord de la paroi formant le bord haut du panneau extérieur, le joint lécheur étant fixé sur ledit raidisseur.

L'invention porte aussi sur un véhicule avec panneau de carrosserie extérieur et une vitre située de sorte que l'un des bords du panneau extérieure est en vis-à-vis de la surface de la vitre, remarquable en ce qu'il comporte un joint lécheur suivant l'une des revendications de 1 à 7 fixé le long dudit bord du panneau extérieur en vis-à-vis de la vitre, disposé entre le panneau extérieur et la vitre de sorte que la lèvre de contact est en appui contre la surface de la vitre et la lèvre d'étanchéité est en appui contre la face intérieure du panneau extérieur situé du côté de la vitre, ledit bord du panneau extérieure ou en dessous dudit bord du panneau extérieure.

Dans un mode de réalisation particulier de l'invention, le panneau extérieur comporte un raidisseur contre la face intérieure dudit panneau et le long du bord, sur lequel est fixé le joint lécheur.

L'invention sera mieux comprise à la lecture de la description qui va suivre, donnée uniquement à titre d'exemple et faite en se référant aux dessins annexés, sur lesquels :
- La figure 1 est une vue en perspective d'un véhicule comportant une porte latérale avant et une porte latérale arrière.
- La figure 2 est une vue en perspective d'un joint lécheur suivant l'invention fixé à un élément de carrosserie.
- La figure 3 est une vue en coupe du joint lécheur fixé à un élément de carrosserie, suivant un plan perpendiculaire à l'axe longitudinal dudit joint lécheur.
- La figure 4 est une vue en perspective du joint lécheur.
- La figure 5 est une vue en perspective d'un deuxième mode de réalisation du joint lécheur.
- La figure 6 est une vue d'une extrémité d'un joint lécheur suivant un troisième mode de réalisation.

Les dessins sont des représentations schématiques pour faciliter la compréhension de l'invention. Les composants ne sont pas forcément représentés à l'échelle. Les mêmes références correspondent aux mêmes composants d'une figure à l'autre.

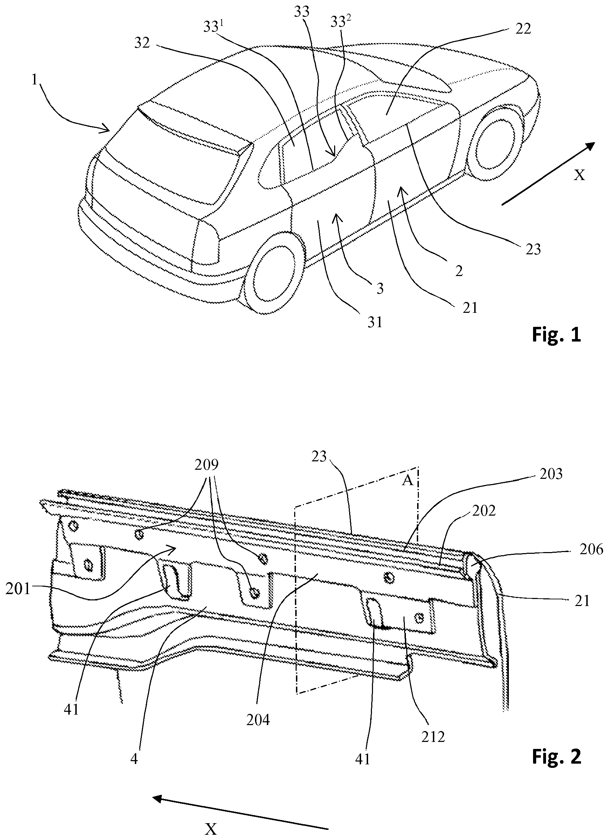

La figure 1 montre un véhicule 1 comportant une porte latérale avant 2 et une porte latérale arrière 3. La porte avant 2 comporte une vitre avant 22 coulissant verticalement entre une position fermée et position ouverte. En position ouverte, la majeure partie de la vitre 22 est descendue derrière le panneau extérieur 21, et en position fermée la vitre est remontée de manière à fermer une partie fenêtre située au-dessus du panneau extérieur 21. Le panneau extérieur 21 forme avec un panneau intérieur de porte, non représenté dans les figures, un caisson de porte situé sous la partie fenêtre. La vitre 22 coulisse entre la position fermée dans laquelle elle ferme la partie fenêtre de la porte avant 2 et une position ouverte dans laquelle elle est au moins en majeure partie à l'intérieur du caisson de porte avant 2. Le panneau extérieur 21 comporte un bord supérieur 23 longeant la partie fenêtre de la porte avant 2. Le bord supérieur 23 est sensiblement droit et parallèle à un axe longitudinal X du véhicule 1.

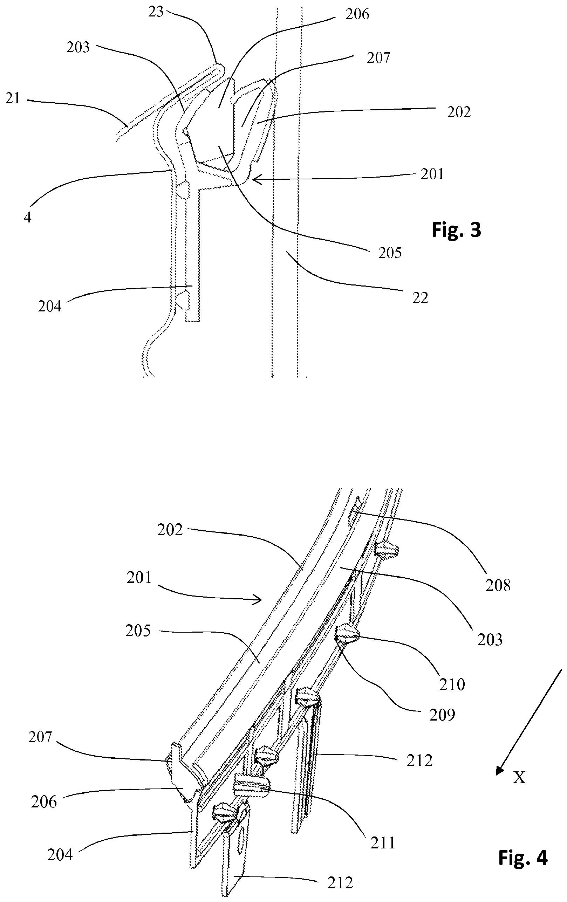

Comme illustré en figure 2 et 3, un joint lécheur 201 est disposé derrière le panneau extérieur 21, le long du bord supérieur 23. Ce joint lécheur 201 comporte une lèvre de contact 202 qui s'appuie sur la vitre 22, et une lèvre d'étanchéité 203 qui s'appuie contre la face du panneau extérieur 21 orientée du côté de la vitre 22, que l'on nomme face intérieure, juste en dessous du bord supérieur 23 du panneau extérieur 21. La lèvre d'étanchéité 203 est donc pratiquement invisible depuis l'extérieur du véhicule car cachée par le panneau extérieur 21. Lorsque la vitre 22 est en position ouverture, la lèvre de contact 202 peut ne plus être en contact avec ladite vitre 22 si celle-ci descend plus bas que le joint lécheur 201.

La lèvre de contact 202 et la lèvre d'étanchéité 203 sont reliées à leur base à un corps 204. Le corps 204 s'étend dans une direction longitudinale, sensiblement sur la longueur du bord supérieur 23 et parallèlement à ce bord supérieur 23. Il comporte des moyens de fixation 209 au panneau extérieur 21, comme par exemple plusieurs trous de fixation pour le passage de vis ou de clips 210 (illustrés en figure 4). Dans le mode de réalisation illustré dans les figures 2 et 3, un raidisseur4 est fixé contre la face intérieure du panneau extérieur 21, en dessous du bord supérieur 23 de ce panneau extérieur 21. Le corps 204 est fixé à ce raidisseur 4. Le raidisseur 4 permet de rigidifier le panneau extérieur 21 le long de son bord supérieur 23.

Les deux lèvres 202 et 203 s'étendent dans la longueur du corps 204. Elles sont disposées l'une en vis-à-vis de l'autre de sorte à former les bords d'un canal 205 ouvert, s'étendant sensiblement sur toute la longueur du bord supérieur 23.

Le corps 204 est de forme sensiblement plane, s'étendant dans une direction longitudinale, et les lèvres 202 et 203 sont reliées au corps 204 le long d'un des bords longitudinaux dudit corps 204. Lorsque le joint lécheur 201 est fixé au panneau extérieur 21, le corps 204 s'étend sensiblement verticalement, en se plaçant dans le référentiel du véhicule 1, avec les lèvres 202 et 203 situées au-dessus du corps 204 dans cette direction verticale, et parallèlement au bord supérieur 23.

L'ouverture du canal 205 est formée par l'extrémité de chacune des lèvres 202 et 203 opposée à la zone de liaison de chacune de ces lèvres 202 et 203 avec le corps 204. L'ouverture du canal 205 s'étend donc sur la longueur du joint lécheur 201 et du corps 204. Lorsque le joint lécheur 201 est fixé au panneau extérieur 21, les lèvres 202 et 203 sont orientées vers le haut du véhicule 1, de sorte que l'ouverture du canal 205 soit en vis-à-vis de l'espace qui existe entre le bord supérieur 23 du panneau extérieur 21 et la vitre 22. La lèvre de contact 202 forme une barrière d'étanchéité avec la vitre 22, et la lèvre d'étanchéité 203 forme une barrière d'étanchéité avec le panneau extérieur 21, du côté de sa face intérieure et le long du bord supérieur 23. Ainsi, l'eau qui ruisselle sur la vitre 22 est arrêtée par la lèvre de contact 202 et rentre dans le canal 205 par l'ouverture dudit canal 205, et ne peut pas s'écouler à l'intérieur du caisson de porte 2 en passant entre le bord supérieur 23 du panneau extérieur 21 et la vitre 22. De plus, si le niveau de l'eau augmente dans le canal 205 et déborde dudit canal 205, la lèvre d'étanchéité 203 empêche l'eau de couler le long de la face intérieure du panneau extérieur 21.

Le joint lécheur 201 comporte au moins à l'une des extrémités du canal 205 un élément de fermeture sous la forme d'une paroi de fermeture 206 qui ferme au moins partiellement l'extrémité du canal 205, afin de fermer au moins partiellement cette extrémité du canal 205 lorsque le joint lécheur 201 est fixé au panneau extérieur 21 avec la lèvre de contact 202 en appui contre la vitre 22 et la lèvre d'étanchéité 203 au contact de la face intérieure du panneau extérieur 21. La paroi de fermeture 206 est disposée à l'extrémité des lèvres 202 et 203, au niveau de l'extrémité du canal 205, ces extrémités des lèvres 202 et 203 frottant contre la paroi de fermeture 206 pour assurer l'étanchéité. En variante, la paroi de fermeture 206 s'étend entre les lèvres 202 et 203. En variante, l'élément de fermeture peut être un bourrelet issu d'une des lèvres 202 ou 203, ou encore du corps 204. En autre variante, l'élément de fermeture peut être une pièce ajoutée dans le canal 205, à l'extrémité dudit canal 205, de préférence une pièce pouvant se déformer élastiquement. D'autres formes pour l'élément de fermeture sont envisageable.

Les deux lèvres 202 et 203 sont situées en dessous du bord supérieur 23 suivant l'axe vertical du véhicule 1 de sorte à être quasiment invisibles lorsque l'on regarde le véhicule 1 depuis l'extérieur dudit véhicule 1.

Comme illustré en figure 4, la paroi de fermeture 206 est dans un plan sensiblement perpendiculaire à la direction longitudinale du joint lécheur 201, et les extrémités des lèvres 202 et 203 dans la direction longitudinale forment chacune une surface qui s'étend dans le même plan que la paroi de fermeture 206 afin d'être en contact et de frotter contre une face de cette paroi de fermeture lorsque le joint lécheur 201 est installé sur le véhicule 1, tout en assurant une étanchéité. Par exemple, lorsque le joint lécheur 201 est disposé sensiblement parallèle à l'axe longitudinal X du véhicule 1, la paroi de fermeture 206 peut s'étendre dans un plan sensiblement vertical et transversale au véhicule 1. En variante, si le joint lécheur 201, une fois fixé au véhicule 1, n'est pas parallèle à l'axe longitudinal X du véhicule 1, par exemple non parallèle au plan horizontal du véhicule 1, la paroi de fermeture 206 est disposée de sorte à être sensiblement parallèle à un plan vertical et s'étendant transversalement au véhicule 1 lorsque ledit joint lécheur 201 est fixé au véhicule 1.

Cette paroi de fermeture 206 limite la quantité d'eau qui s'écoule par l'extrémité du canal 205 comportant ladite paroi de fermeture 206, et donc limite la quantité d'eau qui s'écoule à l'intérieur du caisson de porte par cette extrémité du canal 205, la partie formant le fond du canal 205 étant dans le caisson. En variante, le joint lécheur 201 comporte une paroi de fermeture 206 à chacune des extrémités du canal 205.

Lorsque le joint lécheur 201 est installé sur le véhicule 1 avec la lèvre de contact 202 en appui contre la vitre 22 et la lèvre d'étanchéité 203 au contact de la face intérieure du panneau extérieur 21, le long du bord supérieur 23, la paroi de fermeture 206 ferme au moins à 50 % l'extrémité du canal 205. En variante, elle ferme davantage l'extrémité du canal 205, comme par exemple de plus de 75% ou encore totalement. Une paroi de fermeture 206 fermant à 50 % l'extrémité du canal 205 correspond à une paroi de fermeture 206 qui s'étend sur la moitié de la section du canal 205 à l'extrémité dudit canal 205. Le dimensionnement de la paroi de fermeture 206 permet de créer un passage 207 à l'extrémité du canal 205 de dimension choisie afin de créer un passage pour l'évacuation de l'eau à l'extrémité du canal 205 avec un débit maximum volontairement limité. La dimension du passage 207, et donc de la paroi de fermeture 206, est fonction du débit d'eau maximal que l'on souhaite faire passer par l'extrémité du canal 205.

Dans le mode de réalisation illustré dans la figure 3, la lèvre d'étanchéité 203 s'étend sensiblement dans le prolongement du corps 204 et la lèvre de contact 202 est disposée en vis-à-vis de la lèvre d'étanchéité 203, décalée par rapport au plan dans lequel s'étend la lèvre d'étanchéité 203. La lèvre de contact 202 comporte une partie à sa base qui la relie audit corps 204, et qui est sensiblement perpendiculaire au plan du corps 204. La lèvre de contact 202 et la lèvre d'étanchéité 203 forment entre elles le canal 205 et lui donne une section de forme sensiblement en "U", la lèvre de contact 202 comportant un segment sensiblement parallèle à un segment de la lèvre d'étanchéité 203.

En variante, d'autres formes pour le corps 204 et les deux lèvres 202 et 203 peuvent être envisagées pour créer le canal 205. Par exemple, le corps 204 peut comporter une partie formant un U dans sa section suivant un plan perpendiculaire à sa direction longitudinale, et chacune des lèvres peuvent être disposées dans la continuité des branches du « U ».

La paroi de fermeture 206 est réalisée par une excroissance du corps 204. Par exemple, le corps 204 est réalisé dans un premier matériau et comporte une excroissance à l'une de ses extrémités ou à chacune de ses extrémités, et la lèvre de contact 202 et la lèvre d'étanchéité 203 sont surmoulées sur le corps 204. Les deux lèvres sont par exemple surmoulées en même temps, dans le même matériau au cours d'une seule opération. En variante, la ou les parois de fermeture 206 sont formées par une excroissance de l'une des lèvres 202 ou 203.

Les lèvres 202 et 203 sont réalisées en matériau élastique et souple, comme par exemple en caoutchouc ou un mélange de thermoplastique connu sous la dénomination commerciale Végaprène. Le corps 204 est réalisé dans un matériau plus rigide que les lèvres 202 et 203, comme par exemple en polypropylène. D'autres matières connues de l'homme du métier peuvent être utilisées.

Comme illustré en figure 4, le joint lécheur comporte un trou d'évacuation 208 disposé entre les deux extrémités dudit canal 205, traversant la lèvre de contact 202, à proximité du fond du canal 205. Cette disposition permet d'évacuer l'eau accumulée dans le canal 205 dans une zone située entre les deux extrémités dudit canal 205. En variante, le trou d'évacuation 208 est réalisé dans la lèvre d'étanchéité 203 ou une partie du corps 204 lorsque celui-ci forme l'une des parois dudit canal 205.

Dans une variante, la paroi de fermeture 206 comporte un trou de passage. Cette disposition est notamment intéressante lorsque ladite paroi de fermeture 206 ferme totalement l'extrémité du canal. En variante, le joint lécheur 201 comporte un ou des trous de passage dans la paroi ou les parois de fermeture 206 et un ou plusieurs trous d'évacuation 208 entre les deux extrémités du canal 205.

Le dimensionnement du ou des trous de passage permet de créer un passage à l'extrémité du canal 205 de dimension choisie afin de créer une évacuation de l'eau à l'extrémité du canal 205 avec un débit maximum volontairement limitée. La dimension du trou de passage est fonction du débit d'eau maximale que l'on accepte de faire passer par l'extrémité du canal 205. Cette variante est particulièrement intéressante lorsque la paroi de fermeture 206 ferme totalement l'extrémité du canal 205.

En figure 4, le corps 204 comporte des clips 210 passant dans les trous de fixation 209 qui forment les moyens de fixation 209. Les clips 210 se fixent dans des trous situés sur le raidisseur4 de porte 2. Le corps 204 comporte un pion de centrage 211 permettant un positionnement précis du joint lécheur 201 sur le véhicule 1. Le corps 204 comporte en outre des pattes de maintien 212 s'étendant dans le plan dudit corps 204, à l'opposé du bord dudit corps 4 comportant les lèvres 202 et 203. Comme illustré en figure 2, certaines de ces pattes de maintien 212 se positionnent entre le raidisseur 4 et des pattes de plaquages 41 fixées audit raidisseur 4. Des moyens de fixation 209 au raidisseur 4 sont disposés dans ces pattes de maintien 212. Cette interaction entre les pattes de maintien 212 et les pattes de fixation 41 permettent notamment de positionner facilement et maintenir le joint lécheur 201 contre le raidisseur 4 pour faciliter sa fixation.

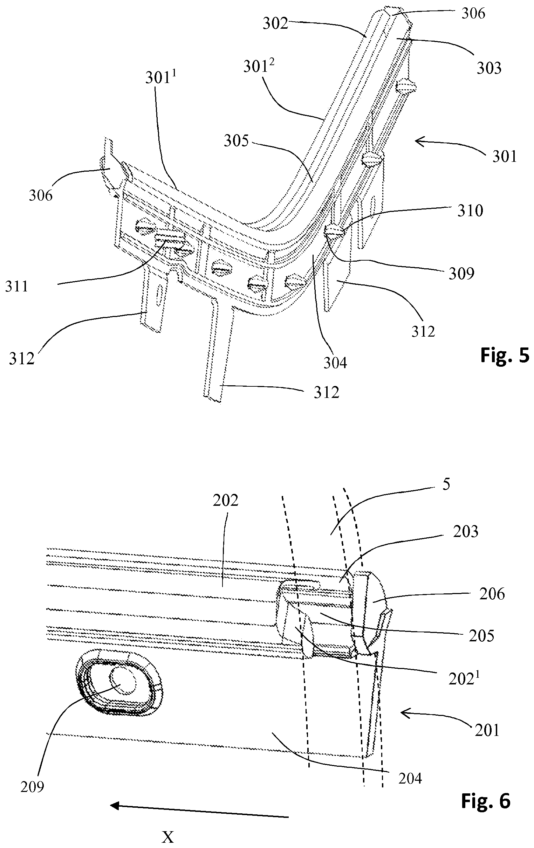

En figure 1, la porte latérale arrière 3 comporte un panneau extérieur 31 avec un bord supérieur 33 formant le bord du panneau extérieur 31 le long d'une vitre 32 s'ouvrant par coulissement vertical. Ce bord supérieur 33 ne forme pas une ligne droite, mais comporte un segment arrière 33¹ sensiblement droit et parallèle à l'axe longitudinal X du véhicule, et un segment avant 33² montant vers le haut du véhicule en direction de l'avant en s'approchant d'un pied milieu du véhicule situé entre la porte latérale avant 2 et la porte latérale arrière 3. Le segment avant 33² peut être courbé ou droit. La jonction entre le segment avant 33² et arrière 33¹ du bord supérieur 33 forme une zone courbée. Le segment arrière 33¹ est situé vers l'arrière du véhicule 1 et le segment avant 33² vers l'avant du véhicule 1. La figure 5 illustre un joint lécheur 301 de conception similaire au joint lécheur 201 de la porte avant 2, mais dont la forme est adaptée pour être installé le long du bord supérieur de la porte arrière 3. Afin de suivre la forme du bord supérieur 33 du panneau extérieur 31 de la porte arrière 3, le joint lécheur 201 a une forme sur sa longueur comparable à celle dudit bord supérieur 33. Il comporte ainsi une première partie 301¹ de forme sensiblement droite et correspondant au segment arrière 33¹ du bord supérieur 33, et une deuxième partie 301² de forme courbée correspondant au segment avant 33² dudit bord supérieur 33. La première partie 301¹ suit le segment arrière 33¹ du bord supérieur 33, et la deuxième partie 301² suit le bord supérieur du segment arrière 33¹ du bord supérieur 33. Le joint lécheur 301 comporte aussi une lèvre de contact 302 et une lèvre d'étanchéité 303, formant les bord d'un canal ouvert 305, fixées à leur base à un corps 304. Le canal 305 suit la forme du bord supérieur 33. Le joint lécheur 301 comporte à l'extrémité du canal 305 située dans la première partie 301¹ une paroi de fermeture 306. Cette paroi de fermeture 306 limite la quantité d'eau qui s'écoule par l'extrémité du canal 305 située dans la première partie 301¹. Dans ce mode de réalisation, le joint lécheur 301 comporte un trou d'évacuation, non visible dans la figure 5, disposé dans le canal 305, à la jonction entre la première partie 301¹ et 301² afin d'évacuer l'eau qui stagnerait dans cette zone. Par exemple, lorsque le véhicule 1 est garé dans une descente, l'avant orienté vers la descente, en cas de pluie, l'eau récupérée par la première partie 301¹ du joint lécheur 301 s'écoule vers la deuxième partie 301² du fait de la pente dans laquelle est stationnée le véhicule. Mais l'eau récupérée par la deuxième partie 301² s'écoule quant à elle vers la première partie 301¹ du fait de l'orientation de cette deuxième partie 301². L'eau récupérée par le joint 301 lécheur dans le canal 305 s'accumule donc dans le canal 205 au niveau de la jonction entre la première partie 301¹ et la deuxième partie 301². Le trou d'évacuation placé à cette jonction permet d'évacuer l'eau qui stagne à cette jonction entre la première partie 301¹ et la deuxième partie 301², suivant un débit maximum donné par la taille du trou d'évacuation.

Dans le mode de réalisation illustré en figure 5, le joint lécheur 301 comporte aussi dans sa deuxième partie 301² une paroi de fermeture 306 à l'extrémité du canal 305. Les parois de fermeture 306 s'étendent sensiblement dans un plan vertical et transversal au véhicule, de sorte à être dans l'alignement des montant d'un cadre de fenêtre entourant la vitre 302 lorsque celle-ci est en position fermée.

Le corps 304 comporte des trous de fixation 309 traversés par des clips 310 destinés à ledit corps 304 sur le panneau de carrosserie 31, et plus particulièrement sur un raidisseur du panneau extérieur 31 non représenté.

Le corps 304 comporte des pattes de maintien 312 qui coopèrent avec des pattes de maintien situé sur le raidisseur de panneau extérieur 31 de la porte arrière 3, de manière similaire au joint lécheur 201 disposé sur la porte avant 2.

Ce joint lécheur 301 est fixé sur la porte arrière 3 de sorte que la lèvre d'étanchéité 303 s'appuie sur la face du panneau extérieur 31 orientée vers l'intérieur du véhicule 1, et la lèvre de contact 302 s'appuie contre la vitre 3. La lèvre d'étanchéité 303 est située en dessous du bord supérieur 33 du panneau extérieur 31. La lèvre de contact 302 est elle aussi située plus basse que le bord supérieur 33 suivant la direction verticale du véhicule 1, de sorte que ces deux lèvres 302 et 303 soient très peu visibles, ou invisibles, pour un usager situé à une distance faible du véhicule 1, comme par exemple à plus d'un mètre.

Ce type de joint lécheur 201, 301, permet de limiter la quantité d'eau qui coule à l'intérieur du caisson de porte, ou d'éviter que de l'eau ne coule dans le caisson de porte. En effet, la position du joint lécheur 201, ou respectivement 301, plus bas que le bord supérieur 23, ou respectivement le bord supérieur 33, implique que l'eau récupérée par le canal 205, ou respectivement 305, se situe sous le bord supérieur 23, ou respectivement sous le bord supérieur 33. Sans paroi de fermeture 206, ou respectivement 306, l'eau accumulée dans le canal 205, ou respectivement 305, s'écoulerait dans le caisson par les extrémités du joint lécheur 201, ou respectivement 301. La mise en place des parois de fermeture 206, ou respectivement 306, bloque l'écoulement de l'eau aux extrémités du canal 205, ou respectivement 305. Lors de forte pluie, l'eau s'accumule dans le canal 205, ou respectivement 305, jusqu'à déborder et s'écouler le long de la face extérieure du panneau extérieur 21, ou respectivement 31, opposée à la face intérieure dudit panneau extérieur 21, ou respectivement 31.

Les trous d'évacuation 208 ou les trous de passage aux extrémités du canal 205, ou respectivement 305, permettent un écoulement maîtrisé de l'eau accumulé : le débit et la zone d'écoulement sont définies de manière à éviter que les systèmes électriques situés dans la porte 2, ou respectivement 3, ne soient détériorés par l'eau.

La figure 6 illustre un mode de réalisation du joint lécheur 201 dans lequel la lèvre de contact 203 s'étend jusqu'à la paroi de fermeture 206 disposée à une extrémité du joint lécheur 201, mais l'extrémité de la lèvre d'étanchéité 203 ne s'étend pas jusqu'à la paroi de fermeture 206 mais laisse un espace libre entre elle et cette paroi de fermeture 206. Cette espace libre permet le passage par exemple d'une coulisse de vitre 5, représentée avec lignes pointillées. La lèvre d'étanchéité 202 comporte à son extrémité qui fait face à la coulisse 5 une paroi secondaire 2021, pour bloquer l'écoulement de l'eau accumulée par le canal 205. La coulisse 5 passe donc entre cette paroi secondaire 2021 et la paroi de fermeture 206. Ce même mode de réalisation peut s'appliquer au joint lécheur 301 de la figure 5.

Dans les modes de réalisation présentés, le corps 204 ou 304 est représenté comme un profilé plat. D'autres formes du corps peuvent être utilisés

En variante, le joint lécheur 201 ou 301 est fixé sur un panneau extérieur de carrosserie autre que celui sur d'une porte latérale 2 ou 3, comme par exemple sur un panneau de carrosserie formant une aile arrière de véhicule et longeant une vitre latérale arrière de véhicule.

En figures 3, 4 et 5, la lèvre d'étanchéité 203, ou 303, est sous la forme d'une lame souple. En variante, d'autres formes pour la lèvre d'étanchéité 203 ou 303, peuvent être appliquée. Par exemple, la lèvre d'étanchéité 203, ou 303, peut comporter un corps creux s'étendant sur toute sa longueur.

## Revendications

1. Joint lécheur (201, 301) de vitre comprenant un corps (204, 304) s'étendant dans une direction longitudinale et comportant des moyens de fixation (209, 309) à un panneau de carrosserie (21, 31), une lèvre de contact (202, 302) et une lèvre d'étanchéité (203, 303), les deux lèvres (202, 302, 203, 303) étant en matériau élastique, reliées au corps (204, 304) et s'étendant sensiblement sur la longueur dudit corps (204, 304), la lèvre de contact (202, 302) et la lèvre d'étanchéité (203, 303) étant en vis-à-vis de sorte à former les bords d'un canal (205, 305) ouvert sur sa longueur et s'étendant sensiblement sur la longueur du corps (204, 304), le joint lécheur (201, 301) comporte un élément de fermeture (206, 306) à l'une des extrémités du canal (205, 305) de sorte à fermer au moins partiellement ladite extrémité du canal (205, 305), **caractérisé en ce que** ledit élément de fermeture (206, 306) est soit réalisé par une excroissance du corps (204), soit formé par une excroissance de la lèvre d'étanchéité (203, 303) ou de la lèvre de contact (202, 302).

2. Joint lécheur (201, 301) suivant la revendication précédente, **caractérisé en ce que** l'élément de fermeture est une paroi de fermeture (206, 306), de préférence sensiblement perpendiculaire à la direction longitudinale du joint lécheur (201, 301), disposée au niveau de l'extrémité du canal (205, 305).

3. Joint lécheur (201, 301) suivant l'une des revendications précédentes, **caractérisé en ce qu'**il comporte deux éléments de fermeture (206, 306), chacun au niveau d'une extrémité du canal (205, 305).

4. Joint lécheur (201, 301) suivant l'une des revendications précédentes, **caractérisé en ce que** le corps (204, 304) est sous la forme d'un profilé sensiblement plan, l'une des lèvres (202, 203, 302, 303) s'étendant le long d'un des bords longitudinaux du profilé (204, 304), dans le prolongement dudit profilé (204, 304), et l'autre lèvre (202, 203, 302, 303) s'étendant depuis l'une des faces du corps (204, 304) et comportant un segment dans sa section qui est sensiblement parallèle à la lèvre précédente (202, 203, 302, 303) de sorte à former un canal (205, 305) de section en forme de « U ».

5. Joint lécheur (201, 301) suivant l'une des revendications précédentes **caractérisé en ce que** la ou les éléments de fermeture (206, 306) sont issues du corps (204, 304), et/ou de la lèvre de contact (202, 302), et/ou de la lèvre d'étanchéité (203, 303).

6. Joint lécheur (201, 301) suivant l'une des revendications précédentes, **caractérisé en ce que** la ou les éléments de fermeture (206, 306) comportent un trou de passage apte à laisser s'écouler l'eau s'accumulant dans le canal (205, 305).

7. Joint lécheur (201, 301) suivant l'une des revendications précédentes, **caractérisé en ce qu'**il comporte un trou d'évacuation (208) disposé dans l'une des parois du canal (205), entre les deux extrémités dudit canal (205), de sorte à permettre une évacuation de l'eau s'accumulant dans le canal (205, 305) suivant un débit donné.

8. Porte (2, 3) de véhicule (1) comprenant une partie fenêtre comportant une vitre (22, 32) située au-dessus d'une partie caisson, la partie caisson étant formée par un panneau extérieur (21, 31) et un panneau intérieur, **caractérisé en ce que** la porte comporte un joint lécheur (201, 301) suivant l'une des revendications précédentes, dans le caisson, fixé au panneau extérieur (21, 31), le long et sous un bord haut dudit panneau extérieur (21, 31) séparant le caisson de la partie fenêtre, la lèvre de contact (202, 302) étant en appui contre la surface de la vitre (22, 32) et la lèvre d'étanchéité (203, 303) étant en appui contre le panneau extérieur (21, 31), le long du bord haut dudit panneau extérieure (21, 31).

9. Porte (2, 3) suivant la revendication précédente **caractérisé en ce que** la vitre (22, 32) coulisse dans le caisson depuis une position fermée dans laquelle elle ferme la partie fenêtre et une position ouverte dans laquelle elle est au moins en partie dans le caisson.

10. Véhicule (1) avec panneau de carrosserie extérieur (21, 31) et une vitre (22, 32) située de sorte que l'un des bords du panneau extérieure (21, 31) est en vis-à-vis de la surface de la vitre (22, 32), **caractérisé en ce qu'**il comporte un joint lécheur (201, 301) suivant l'une des revendications de 1 à 7 fixé le long dudit bord du panneau extérieur (21, 31) en vis-à-vis de la vitre (22, 32), disposé entre le panneau extérieur (21, 31) et la vitre (22, 32) de sorte que la lèvre de contact (202, 302) est en appui contre la surface de la vitre (22, 32) et la lèvre d'étanchéité (203, 303) est en appui contre la face intérieure du panneau extérieur (21, 31) situé du côté de la vitre (22, 32), sur ledit bord du panneau extérieure (21, 31) ou en dessous dudit bord du panneau extérieure (21, 31).

## Patentansprüche

1. Scheibenabdichtung (201, 301) mit einem sich in Längsrichtung erstreckenden Körper (204, 304) mit Befestigungsmitteln (209, 309) an einer Karosserieplatte (21, 31), einer Kontaktlippe (202, 302) und einer Lippe Dichtung (203, 303), wobei die beiden Lippen (202, 302, 203, 303) aus elastischem Material bestehen, die mit dem Körper (204, 304) verbunden sind und sich im Wesentlichen über dessen Länge erstrecken, wobei die Kontaktlippe (202, 302) und die Dichtlippe (203, 303) einander gegenüberliegend angeordnet sind, um die Ränder eines über seine Länge offenen und im Wesentlichen über die Länge des Körpers (204, 304) verlaufenden Kanals (205, 305) zu bilden, wobei die Dichtung (201, 301) (206, 306) an einem der Enden des Kanals (205, 305) so angeordnet ist, dass das Ende des Kanals (205, 305) zumindest teilweise verschlossen wird, **dadurch gekennzeichnet, dass** das Verschlusselement (206, 306) durch Ausziehen des Körpers (206) hergestellt ist (204) entweder durch einen Ausschlag der Dichtlippe (203, 303) oder der Kontaktlippe (202, 302) gebildet wird.

2. Abdichtung (201, 301) nach dem vorhergehenden Anspruch, **dadurch gekennzeichnet, dass** das Verschlusselement eine Verschlusswand (206, 306) ist, vorzugsweise im Wesentlichen rechtwinklig zur Längsrichtung der Dichtung (201, 301), am Ende des Kanals (205, 305) angeordnet.

3. Lappen-Dichtung (201, 301) nach einem der vorhergehenden Ansprüche, **dadurch gekennzeichnet, dass** sie zwei Verschlusselemente (206, 306) aufweist, die jeweils an einem Ende des Kanals (205, 305) angeordnet sind.

4. Lappen-Dichtung (201, 301) nach einem der vorhergehenden Ansprüche, **dadurch gekennzeichnet, dass** der Körper (204, 304) als im Wesentlichen ebenes Profil ausgebildet ist, wobei sich eine der Lippen (202, 203, 302, 303) entlang einer der Längsränder erstreckt des Profils (204, 304) in Verlängerung des Profils (204, 304) und die andere Lippe (202, 203, 302, 303), die sich von einer der Seiten des Körpers (204, 304) erstreckt und in ihrem Querschnitt einen im Wesentlichen parallelen Abschnitt aufweist der vorhergehenden Lippe (202, 203, 302, 303) so ausgebildet ist, dass ein Kanal (205, 305) mit "U"-förmigem Querschnitt gebildet wird.

5. Abdichtung (201, 301) nach einem der vorhergehenden Ansprüche, **dadurch gekennzeichnet, dass** das oder die Verschlusselemente (206, 306) aus dem Körper (204, 304) und/oder der Kontaktlippe (202, 302) und/oder der Dichtlippe stammen (203, 303).

6. Lappen-Dichtung (201, 301) nach einem der vorhergehenden Ansprüche, **dadurch gekennzeichnet, dass** das oder die Verschlusselemente (206, 306) ein Durchgangsloch aufweisen, das dazu geeignet ist, das in dem Kanal (205, 305) angesammelte Wasser fließen zu lassen.

7. Lappen-Dichtung (201, 301) nach einem der vorhergehenden Ansprüche, **dadurch gekennzeichnet, dass** sie ein Ablassloch (208) aufweist, das in einer der Wandungen des Kanals (205) zwischen den beiden Enden des Kanals (205) angeordnet ist, sodass ein Ablassen des in dem Kanal (205) angesammelten Wassers möglich ist (205, 305) mit einem bestimmten Durchsatz.

8. Fahrzeugtür (2, 3) mit einem Fensterteil mit einer Scheibe (22, 32), die über einem Kastenteil angeordnet ist, wobei der Kastenteil durch eine Außenplatte (21, 31) und eine Innenplatte gebildet ist, **dadurch gekennzeichnet, dass** die Tür eine Lappen-Dichtung (201, 301) nach einem der vorhergehenden Ansprüche im Fahrzeugteil aufweist Kasten, der an der Außenplatte (21, 31) entlang und unter einem oberen Rand der Außenplatte (21, 31) befestigt ist, der den Kasten vom Fensterteil trennt, wobei die Kontaktlippe (202, 302) an der Oberfläche der Scheibe (22, 32) und der Dichtlippe (203, 303) anliegt an der Außenplatte (21, 31) entlang des oberen Randes der Außenplatte (21, 31) abgestützt ist.

9. Tür (2, 3) nach dem vorhergehenden Anspruch, **dadurch gekennzeichnet, dass** die Scheibe (22, 32) aus einer geschlossenen Position, in der sie den Fensterteil schließt, und einer offenen Position, in der sie zumindest teilweise in der Kammer ist, in den Kasten gleitet.

10. Fahrzeug (1) mit einer äußeren Karosserieplatte (21, 31) und einer Scheibe (22, 32), die so angeordnet ist, dass einer der Ränder der äußeren Platte (21, 31) der Oberfläche der Scheibe (22, 32) zugewandt ist, **dadurch gekennzeichnet, dass** es eine Abdichtung (201, 301) aufweist nach einem der Ansprüche 1 bis 7, die entlang des Randes der der Scheibe (22, 32) zugewandten Außenplatte (21, 31) zwischen der Außenplatte (21, 31) und der Scheibe (22, 32) so befestigt sind, dass die Kontaktlippe (202, 302) gegen diese abgestützt ist Die Oberfläche der Scheibe (22, 32) und die Dichtlippe (203, 303) sind an der scheibenseitigen Innenseite der Außenscheibe (21, 31) am Rand der Außenscheibe (21, 31) oder unterhalb des Randes der Außenscheibe (21, 31) abgestützt ...

## Claims

1. Glass joint (201, 301) comprising a body (204, 304) extending in a longitudinal direction and having means of attachment (209, 309) to a body panel (21, 31), contact lip (202, 302) and a waterproofing lip (203, 303), the two lips (202, 302, 203, 303) being of elastic material, connected to the body (204, 304) and extending significantly over the length of the body (204, 304), the contact lip (202, 302) and the waterproofing lip (203, 303) being opposite so as to form the edges of a canal (205, 305) open on its length and extending significantly over the length of the body (204, 304), the licking joint (201, 301) has a closure element (206, 306) at one end of the canal (205, 305) so as to close at least partially the said end of the canal (205, 305), in that the said closure element (206, 306) is either **characterized by** an extermination growth of the body (204), or formed by exgrowth of the lep (203, 303) or the contact lip (202, 302).

2. Licher joint (201, 301) following the previous claim, **characterized in that** the closure element is a closure wall (206, 306), preferably substantially perpendicular to the longitudinal direction of the lacher joint (201, 301), arranged at the end of the canal (205, 305).

3. Licher joint (201, 301) following one of the previous claims, **characterized by** having two closing elements (206, 306), each at one end of the canal (205, 305).

4. Licher joint (201, 301) following one of the previous claims, **characterized by** the fact that the body (204, 304) is in the form of a substantially plane profile, one of the lips (202, 203, 302, 303) extending along one of the longitudinal edges the profile (204, 304), in the extension of the profile (204, 304), and the other lip (202, 203, 302, 303) extending from one of the body's faces (204, 304) and having a segment in its section which is substantially parallel to the previous lip (202, 203, 302, 303) so as to form a U-shaped section channel (205, 305).

5. Hidder (201, 301) following one of the previous claims characterized that the closure element(s) (206, 306) originated from the body (204, 304), and/or from the contact lip (202, 302), and/or from the lip (2003, 303).

6. Hidder (201, 301) following one of the previous claims, characterized as the closure element(s) (206, 306) includes a passage hole capable of allowing water accumulating in the canal (205, 305).

7. Licher joint (201, 301) following one of the previous claims, characterized as it contains an evacuation hole (208) placed in one of the walls of the canal (205), between the two ends of the canal (205), so as to allow the discharge of water accumulating in the canal (205, 305) following a given flow rate.

8. Vehicle door (2, 3) consisting of a window part with a window (22,32) above a box part, the box part being formed by an outside panel (21, 31) and an inside panel, **characterized by** the door having a lubricating joint (201, 301) following one of the preceding claims in the box, attached to the outer panel (21, 31), along and under a high edge of the outer panel (21, 31) separating the box from the window part, the contact lip (202, 302) being in support of the surface of the glass (22, 32) and the leakproof lip (203, 303) being in support of the outer panel (21, 31), along the upper edge of the outer panel (21, 31).

9. Door (2, 3) following the previous claim **characterized in that** the window (22, 32) slides in the box from a closed position in which it closes the window part and an open position in which it is at least partly in the box.

10. Vehicle (1) with exterior body panel (21, 31) and a glass pane (22, 32) so that one of the edges of the outer panel (21, 31) is facing the surface of the glass (22, 32), characterized as it has a lubricating joint (201, 301) according to one of the claims of 1 to 7 fixed along the said edge of the outer panel (21, 31) opposite the glass (22, 32), placed between the outer panel (21, 31) and the glass (22, 32) so that the contact lip (202, 302) is in support against the surface of the window (22, 32) and the leakproof lip (203, 303) is in support against the inner face of the outer panel (21, 31) located on the side of the window (22, 32), on the outer edge of the panel (21, 31) or below the outer panel of the outer panel (21, 31).
